# FASCICULE DE BREVET EUROPEEN

(11) **EP 0 592 333 B1**
(45) Date de publication et mention de la délivrance du brevet: **07.02.2001**
(21) Numéro de dépôt: 93420382.9
(22) Date de dépôt: 23.09.1993
(51) Int. Cl.: H01B 1/12, C08F 8/34, C08F 8/42, C08F 8/30

(54) **Compositions de polymères contenant des composés organiques amphiphiles électroactifs de la famille des complexes à transfert de charge et/ou des sels d'ions radicaux, leur obtention et leur utilisation**
Polymerzusammensetzungen, enthaltend organische amphiphile elektro-aktive Charge-Transfer-Komplexe und/oder Radikalionensalze, Herstellung und Verwendung davon
Polymer compositions containing organic amphiphilic electroactive charge transfer complexes and/or radical-ion salts, their manufactures and use thereof

(30) Priorité: 07.10.1992 FR 9212265
(43) Date de publication de la demande: 13.04.1994
(73) Titulaire: TORAY PLASTICS EUROPE SA, 01701 Saint-Maurice de-Beynost (FR)
(72) Inventeur: Chauvel, Bernard, F-95500 Eaubonne (FR); Richard, Joel, F-60500 Chantilly (FR)
(74) Mandataire: Kügele, Bernhard

(56) Documents cités:
- EP-A- 0 069 292
- EP-A- 0 071 862
- EP-A- 0 217 987
- EP-A- 0 281 449
- EP-A- 0 285 564
- EP-A- 0 362 142
- DE-A- 4 037 799
- FR-A- 2 027 704
- IBM TECHNICAL DISCLOSURE BULLETIN vol. 20, no. 7 , Décembre 1977 , NEW YORK pages 2865 - 2867 D. C. GREEN 'ELECTRICALLY CONDUCTIVE TTF POLYMERS'
- POLYMER JOURNAL vol. 24, no. 3 , 15 Mars 1992 , TOKYO IL-RYON JEON 'ELECTROCHEMICAL DOPING OF POLY(3-VINYLPERYLENE) AND ELECTRICAL PROPERTIES OF DOPED POLYMERS'
- CHEMICAL ABSTRACTS, vol. 104, no. 26, 30 Juin 1986, Columbus, Ohio, US; abstract no. 225469a, INASAWA, SHINTARO 'CONDUCTIVE POLYMERS' page 18 ;colonne 1 ; & JP-A-61 002 703 (SHOWA DENKO K. K.) 8 Janvier 1986

## Description

La présente invention a pour objet des compositions de polymères contenant des composés organiques amphiphiles électroactifs de la famille des complexes à transfert de charge et/ou des sels d'ions radicaux, et en particulier des particules de polymères comportant, implantées à leur surface, des molécules desdits composés amphiphiles, leur procédé d'obtention et leur utilisation pour la fabrication de films de polymères conducteurs.

On sait obtenir des polymères conducteurs constitués de chaînes de doubles liaisons conjuguées, par polymérisation anodique en présence de sels conducteurs ou par polymérisation chimique sous l'action d'oxydants, de composés hétérocycliques comportant deux doubles liaisons conjuguées tels que le pyrrole, le thiophène ou le furanne et leurs dérivés de substitution. En dépit de leur intérêt, le développement industriel de ces polymères a été freiné par différents inconvénients tels qu'une relative instabilité chimique, de faibles propriétés mécaniques et surtout des difficultés de mise en oeuvre inhérentes à leur faible solubilité. Même les polymères les plus stables, comme les polypyrroles, trouvent difficilement des applications. Diverses solutions ont été proposées au problème de la mise en oeuvre de ce type de polymères conducteurs. Ainsi, on a proposé (cf. R. YOSOMIYA et al Makromol. Chem. Rapid. Comm. 7 (1986) 697-701) de préparer des films électroconducteurs composites en mettant en contact des vapeurs de pyrrole avec un film préformé d'un polymère filmogène (alcool polyvinylique ; polychlorure de vinyle ; polyméthacrylate de méthyle) contenant un agent oxydant (par exemple CuCl₂). On a encore proposé dans la demande de brevet européen publiée sous le n° 0.206.414 et dans le brevet américain n° 4.521.450 de polymériser le pyrrole par voie chimique en phase liquide au sein d'un solide poreux ou absorbant tels que le papier ou les matériaux cellulosiques, des fibres naturelles ou synthétiques, des films minces de matériaux plastiques (polyéthylène, polypropylène par exemple). Enfin, on a proposé de procéder à la polymérisation anodique ou chimique de monomères à doubles liaisons conjuguées, notamment du pyrrole et de ses dérivés de susbstitution, en présence de particules de polymères transformables comportant des groupes fonctionnels ioniques, jouant le rôle de dopant du polymère non chargé en fournissant le contre-ion nécessaire à équilibrer les charges électriques du polymère conducteur, cf. demande de brevet anglais publiée sous le n° 2.124.635 ; brevet américain n° 4.552.927 ; demandes de brevets européens n° 0.160.207 et 0.229.992 ; demande de brevet français publiée sous le n° 2.616.790 ; S.J. JASNE et al Synthetic Metals 15 (1986) 175-182 ; dans ce type de procédé, le polymère dopant est généralement dispersé dans le milieu de polymérisation et, plus particulièrement, la polymérisation est réalisée au sein d'un latex de polymère dopant. Un tel procédé se révèle particulièrement intéressant parce qu'il conduit à l'obtention de particules de polymères constituées par le polymère transformable dopant associé au polymère électroconducteur. Selon le cas, les dispersions de ces particules peuvent être utilisées directement pour obtenir des articles électroconducteurs par enduction et évaporation du milieu de dispersion ou bien les particules électroconductrices composites peuvent être séparées du milieu de dispersion par les techniques usuelles et transformées en objets finis.

Il a été proposé dans le brevet européen EP-A-0 362 141 de préparer un polymère électroconducteur constitué d'un support polymérique sur la surface duquel est déposé un réseau à aiguilles d'un complexe à transfert de charge. Ce polymère n'est conducteur qu'en surface et le procédé nécessite deux étapes: la première pour préparer le support polymérique, la seconde pour déposer le complexe à transfert de charge.

Le brevet européen EP-A-0 071 862 décrit un polymère électroconducteur à base de polystyrène, contenant un complexe à transfert de charge. Ce complexe est ajouté sous de forme de poudre ou en solution à une solution de polystyrène. Le solvant est ensuite évaporé. Le complexe à transfert de charge est présent dans la résine sous forme d'aiguilles.

La présente invention permet d'obtenir des polymères qui sont électroconducteurs dans leur masse.

Plus spécifiquement, la présente invention a pour premier objet des compositions de polymères utilisables pour l'obtention de polymères conducteurs aisément transformables. Un deuxième objet de l'invention réside dans des dispersions aqueuses ou hydro-organiques partielles de compositions de polymères utilisables pour l'obtention de compositions polymères électroconductrices aisément transformables ; un troisième objet de l'invention réside dans un procédé d'obtention de compositions de polymères utilisables pour l'obtention de compositions polymères conductrices ; l'invention a pour quatrième objet des compositions polymères conductrices ; un cinquième objet de l'invention réside dans les dispersions aqueuses ou hydro-organiques desdites compositions polymères conductrices ; à titre de sixième objet, la présente invention concerne l'utilisation des compositions polymères électroconductrices pour l'obtention de revêtements conducteurs.

Plus spécifiquement encore, la présente invention consiste tout d'abord en des compositions polymériques, caractérisées en ce qu'elles sont constituées par au moins un polymère transformable (Pm) et au moins un composé organique amphiphile (B) choisi parmi les complexes à transfert de charge et les sels d'ions radicaux de formule générale (I):

D_{d} Aₐ Z_{z} (I)

dans laquelle:
- D représente un donneur d'électrons,
- A représente un accepteur d'électrons,
- Z représente un dopant pouvant être lui-même donneur ou accepteur d'électrons non amphiphile,
- l'un au moins des composés D et A est amphiphile et comporte au moins un substituant hydrocarboné saturé ou insaturé ayant au moins 10 atomes de carbone,
- d représente un nombre égal ou supérieur à 0,
- a représente un nombre égal ou supérieur à 0,
- z représente un nombre égal ou supérieur à 0,
- l'un au moins des symboles d et a représente un nombre supérieur à 0.

Généralement les symboles d, a et z représentent indépendamment les uns des autres des nombres allant jusqu'à 20.

Parmi les donneurs d'électrons D, on peut citer par exemple:
- les tétrahétérofulvalènes et leurs dérivés de formule générale (II): 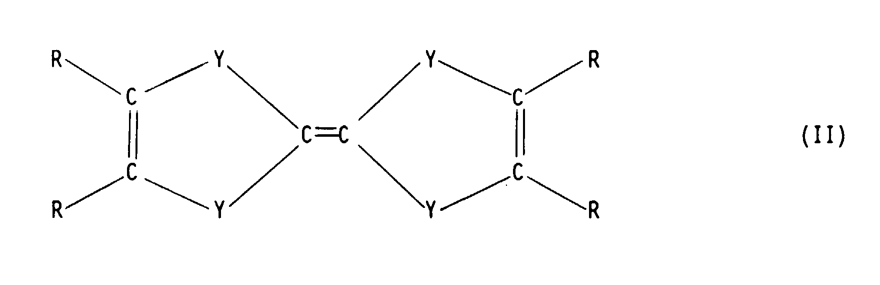 dans laquelle Y représente S ou Se et R représente un groupement hydrocarboné saturé ou insaturé, aliphatique, cycloaliphatique ou aromatique;
- les tétrahétérotétracènes et leurs dérivés de formule générale (III): 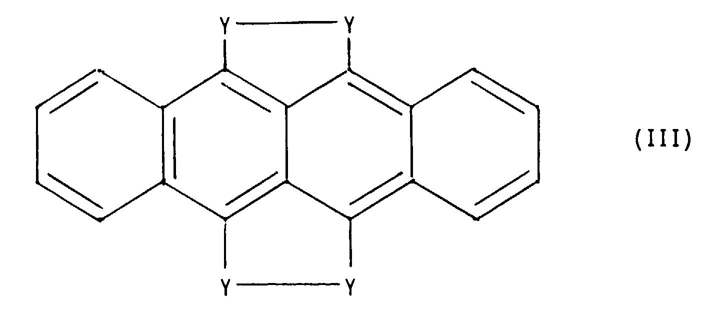 dans laquelle Y représente S et/ou Se;
- les tétrahétéronaphtalènes et leurs dérivés de formule générale (IV): 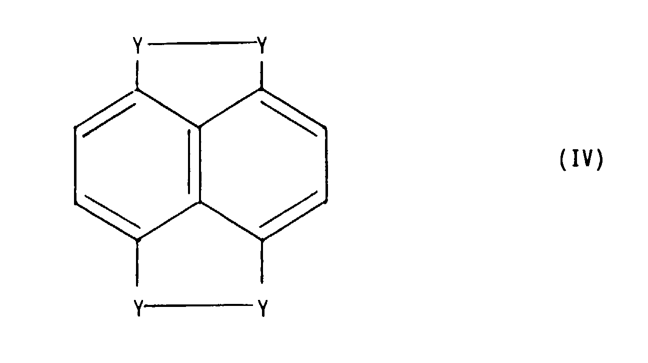 dans laquelle Y représente S et/ou Se;
- le pérylène et ses dérivés;
- les bishétéropyrannes et leurs dérivés de formule générale (V): 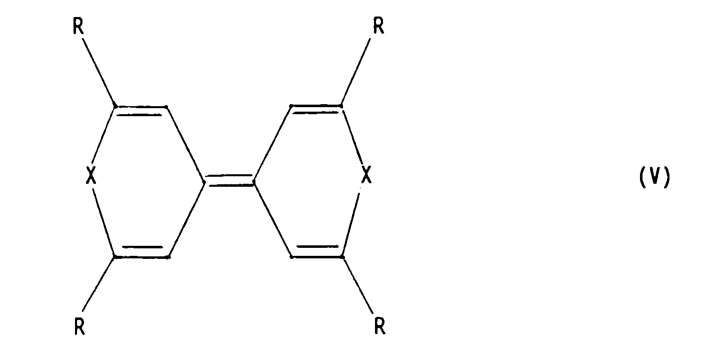 dans laquelle X représente S et/ou Se ou un radical N-alkyle et R représente un radical hydrocarboné saturé ou insaturé, aliphatique, cycloaliphatique ou aromatique;
- les bases aliphatiques telles que les groupes ammonium quaternaires comportant 4 radicaux hydrocarbonés saturés ou insaturés, dont l'un au moins a au moins 10 atomes de carbone;
- les bases aromatiques telles que les groupes ammonium quaternaire dérivant de l'aniline ou de dérivés de l'aniline, dont le substituant de l'atome d'azote ou le cas échéant au moins un substituant du ou des cycles benzéniques est un radical hydrocarboné saturé ou insaturé ayant au moins 10 atomes de carbone, de la N,N'-tétraméthylphénylènediamine et de ses dérivés;
- les bases hétérocycliques telles que les groupes ammonium quaternaires dérivant des pyridines, des pipéridines, des bipyridines, des bipipéridines, des benzopyridines comme les quinoléines, les isoquinoléines, les acridines, les phénazines et les phénanthrolines, dont le substituant de l'atome d'azote ou le cas échéant au moins un substituant du ou des hétérocycles et des cycles benzéniques est un radical hydrocarboné saturé ou insaturé ayant au moins 10 atomes de carbone;
- les bases hétérocycliques comportant plusieurs hétéroatomes de nature différente tels que des atomes de soufre et d'azote, comme les N-alkylbenzothiazoles et leurs dérivés substitués et les N-alkylindoléninium triméthinecyanines et leurs dérivés substitués.

Parmi les accepteurs d'électrons A, on peut citer notamment le tétracyanoéthylène (TCNE), l'hexacyanobutadiène (HCBD), le 1,2,4,5-tétracyanobenzène (TCNB), le 7,7,8,8-tétracyanoquinodiméthane (TCNQ) et ses dérivés substitués, le tétracyanodiquinodiméthane (TCNDQ), le benzotétracyanoquinodiméthane (benzo-TCNQ), la 2,3,5,6-tétrachloroparabenzoquinone (CA), le trinitrobenzène (TNB), le tétranaphtoquinodiméthane (TNAP), le thiophènetétracyanoquinodiméthane (thiophène-TCNQ) le sélénophènetétracyanoquinodiméthane (sélénophène-TCNQ), la tétracyanoquinoquinazolino-quinazoline ainsi que les dérivés de ces accepteurs d'électrons comme leurs dérivés halogénés, fluorés plus particulièrement, leurs dérivés alcoxylés et leurs dérivés alkylés.

Le groupe dopant Z peut représenter un acide de Lewis tel que I⁻, (I₃)⁻, (PF₆)⁻, (ClO₄)⁻, (BF₄)⁻, (ReO₄)⁻, (IO₄)⁻, (FSO₃)⁻, (AsF₄)⁻,(AsF₆)⁻, Br⁻, Cl⁻ et (MnCl₆)⁻.

De préférence Z représente I⁻ , (I₃)⁻ ou Cl⁻.

Le composé amphiphile (B) utilisé dans les compositions polymériques de l'invention contient de préférence un composé donneur amphiphile de formule générale (VI): 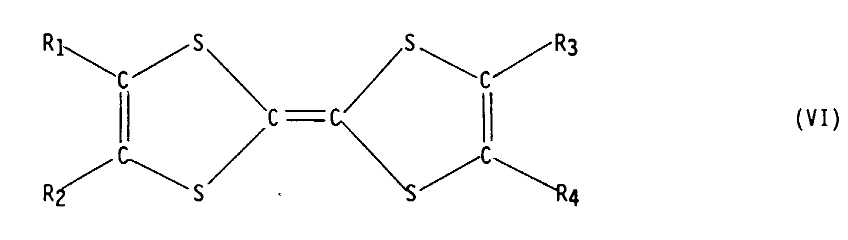 dans laquelle :
- R₁ et R₂, identiques ou différents, représentent des groupes hydrocarbonés saturés ou insaturés, aliphatiques, cycloaliphatiques ou aromatiques, dont l'un au moins est un groupe hydrophobe,
- R₃ et R₄, identiques ou différents, représentent des groupes hydrophiles.

Les groupes R₁ et R₂ peuvent notamment être constitués par des radicaux alkyles ou alkyl-thio, linéaires ou ramifiés, ayant de 1 à 30 atomes de carbone, des radicaux cycloalkyles substitués ou non, cycloalkyl-thio substitués ou non, cycloalkyl-alkyles substitués ou non ou cycloalkyl-alkyl-thio substitués ou non dans lesquels la partie cyclique est de préférence un radical cyclohexyle ou cyclopentyle, le ou les substituants alkyles ont de 1 à 30 atomes de carbone et la partie alkyle a de 1 à 30 atomes de carbone et des radicaux aryles ou aryl-thio tels que phényle, phénylthio ou naphtyle, des radicaux alkylaryles ou alkylaryl-thio dans lesquels le ou les substituants alkyles ont de 1 à 30 atomes de carbone et la partie aryle est un radical phényle ou naphtyle, des radicaux aralkyles ou aralkyl-thio dans lesquels la partie alkyle a de 1 à 30 atomes de carbone et la partie aryle est un radical phényle ou naphtyle, l'un au moins des groupes R₁ et R₂ étant hydrophobe, c'est-à-dire qu'il est constitué par un radical alkyle ou alkyl-thio, linéaire ou ramifié, ayant de 10 à 30 atomes de carbone ou par un radical alkylaryle, alkylaryl-thio, aralkyle ou aralkyl-thio dont la ou les parties alkyles ont 6 à 30 atomes de carbone ou par un radical alkylcycloalkyle, alkylcycloalkyl-thio, cycloalkyl-alkyle ou cycloalkyl-alkyl-thio dont la ou les parties alkyles ont 6 à 30 atomes de carbone. De préférence R₁ et R₂ sont tous deux des groupes hydrophobes.

Les groupes R₃ et R₄ peuvent notamment être constitués par le groupe hydroxycarbonyle, les sels de métal alcalin, d'amine ou d'ammonium quaternaire d'un groupe hydroxycarbonyle, des groupes hydroxycarbonylalkyles ou hydroxycarbonylalkyl-thio ayant 2 à 7 atomes de carbone, alcoxycarbonyles, alcoxycarbonylalkyles ou alcoxycarbonylalkyl-thio ayant de 2 à 8 atomes de carbone, le groupe carbamoyle, des groupes carbamoylalkyles ou N-alkylcarbamoylalkyles, ayant 2 à 12 atomes de carbone.

Parmi les groupes représentés par R₁ et R₂, on préfère les radicaux comportant une chaîne hydrocarbonée linéaire et/ou cyclique ayant de 14 à 30 atomes de carbone dont à titre d'exemples on peut citer de manière non limitative les radicaux tétradécyle, tétradécyl-thio, hexadécyle, hexadécyl-thio, octadécyle, octadécyl-thio, eicosanyle, eicosanyl-thio, nonylphényles, octylphényles, dinonylphényles, dioctylphényles.

Parmi les groupes représentés par R₃ et R₄, on préfère le groupe hydroxycarbonyle, les sels de métal alcalin, d'amine ou d'ammonium quaternaire d'un groupe hydroxycarbonyle, les groupes hydroxycarbonylalkyles et hydroxycarbonylalkyl-thio ayant de 2 à 4 atomes de carbone tels que par exemple les radicaux hydroxycarbonylméthyle, hydroxycarbonylméthyl-thio, hydroxycarbonyléthyle, hydroxycarbonyléthyl-thio, hydroxycarbonylproyle, hydroxycarbonylpropyl-thio et les groupes alcoxycarbonyles, alcoxycarbonylalkyles et alcoxycarbonylalkyl-thio ayant de 2 à 5 atomes de carbone tels que par exemple les radicaux méthoxycarbonyle, éthoxycarbonyle, méthoxycarbonylméthyle, méthoxycarbonylméthyl-thio, méthoxycarbonyléthyle, méthoxycarbonyléthyl-thio, méthoxycarbonylpropyle, méthoxycarbonylpropyl-thio, éthoxycarbonyléthyle, éthoxycarbonyléthyl-thio.

Les composés organiques amphiphiles de formule générale (VI) sont de préférence associés à un dopant Z tel que défini précédemment.

On peut bien entendu utiliser des mélanges de plusieurs composés amphiphiles D_{d} Aₐ Z_{z}.

Les conditions nécessaires à la conduction dans les composés amphiphiles sont les suivantes:
- existence d'empilements ségrégés d'accepteurs ou de donneurs: structures bichaînes pour les complexes à transfert de charge (CTC), monochaînes pour les sels d'ions radicaux (SIR);
- un taux de transfert de charge (ou d'ionicité) fractionnaire traduisant un état de valence mixte: transfert de charge partiel entre A et D dans les CTC, réduction ou oxydation incomplète de A ou D dans les SIR,
- le recouvrement des orbitales 04Xj permettant une délocalisation électronique le long des empilements.

Ces empilements (ou blocs) formés par les molécules de même nature, peuvent être de plusieurs types, selon la nature de A ou D ou du contre-ion; en voici deux exemples extrêmes:
- empilement régulier le long d'un axe de dimères centro-symétriques;
- dimères orthogonaux dans un plan formant un pavage quasi-bidimensionnel.

Les composés organiques amphiphiles (B) peuvent être préparés par des procédés classiques, tels que celui décrit par L.R. Melby et al dans Journal of American Society, vol. 84 (1962), pages 3374-3387.

Les composés organiques amphiphiles (B) de formule D_{d} Aₐ, c'est-à-dire sans dopant Z, sont préparés en faisant réagir un halogénure du donneur d'électrons D avec un sel de l'accepteur d'électrons A, par exemple un iodure de D avec un sel de lithium de A. On peut également faire réagir le composé ainsi obtenu avec un excès d'accepteur d'électrons A, ce qui permet généralement d'obtenir un composé organique amphiphile conducteur de l'électricité. Les composés organiques amphiphiles de formule D_{d} Aₐ Z_{z} peuvent être obtenus en faisant réagir un composé de D et de Z sur l'accepteur d'électrons A.

Les composés de départ utilisés pour la préparation des composés organiques amphiphiles sont obtenus par des procédés classiques. De même, les accepteurs d'électrons A sont des composés connus qui sont préparés selon des procédés classiques.

A titre de polymère constituant les particules transformables, utilisable comme constituant (Pm) des compositions selon l'invention, on peut faire appel à tout polymère aisément transformable en produits finis tels que des fibres, des films, des objets moulés ou des revêtements par les techniques usuelles de transformation des polymères telles que l'extrusion, l'extrusion-soufflage, le calandrage, le moulage, l'enduction, etc... . A ce titre, on peut faire appel à de nombreux polymères thermoplastiques tels que les polymères et copolymères des α-oléfines (polyéthylène, polypropylène, copolymères éthylène-propylène) ; les polymères et copolymères des dioléfines conjuguées (polybutadiène, polyisoprène, copolymères butadiène-isoprène) ; les polymères et copolymères du styrène et de l'α-méthylstyrène avec d'autres monomères mono- ou polyéthylénique tels que le polystyrène, les copolymères styrène-butadiène, styrène-acrylonitrile, les copolymères styrène-butadiène-acrylonitrile, les copolymères styrène-butadiène-acide carboxylique insaturé comme par exemple l'acide maléique ; les polymères et copolymères des esters vinyliques : acétate de vinyle, proprionate de vinyle tels que le polyacétate de vinyle, les copolymères éthylène-acétate de vinyle et leurs dérivés d'hydrolyse (copolymères éthylène-alcool vinylique, copolymère éthylène-acétate de vinyle-alcool vinylique) ; les copolymères acryliques : polyacrylonitrile, polyacrylates et polyméthacrylates d'alkyle, polyacrylamides, polyméthacrylamides, poly(N-méthylolacrylamide, poly(N-méthoxyméthacrylamide) ; des polymères et copolymères d'acides ou d'anhydrides dicarboxyliques et éthyléniques ou leurs esters tels que les acides fumarique, maléïque ou itaconique ; des polymères et copolymères des halogénures éthyléniques tels que le polychlorure de vinyle, le polychlorure de vinylidène, le polyfluorure de vinylidène, etc...

On fait appel, de préférence, à des polymères thermoplastiques aisément dispersables dans l'eau sous forme de dispersions aqueuses stables ou latex.

On peut également faire appel à des polymères thermoplastiques, tels que ceux cités ci-avant, comportant dans leurs chaînes des motifs portant des groupes anioniques pouvant jouer le rôle d'un dopant pour l'initiation du phénomène de conduction. On utilise alors plus particulièrement : les polymères dérivés de monomères éthyléniques à groupes sulfoniques ou sulfonates de métaux alcalins, alcalino-terreux ou d'ammonium, tels que les vinylsulfonates, les méthallylsulfonates, les vinylbenzènesulfonates, les sels de l'acide acrylamido-2 méthyl-2 propanesulfonique, de l'acrylate de sulfo-2 éthyle ; les polymères dérivés de monomères éthyléniques à groupes phosphonates tels que les bis(chloro-2 éthyl)vinylphosphonates.

Comme polymères à groupes anioniques convenant tout particulièrement bien à la préparation des compositions de polymères selon l'invention, on peut encore faire appel à des copolyesters comportant une pluralité de motifs dérivés de diols et/ou de diacides portant un ou plusieurs groupes sulfoniques ou sulfonates. De tels copolyesters ont été décrits notamment dans les brevets français publiés sous les n° 1.401.581 et 1.602.002, et dans le brevet européen n° 0.129.674. On peut encore faire appel à des copolymères greffés obtenus par polymérisation radicalaire en phase aqueuse d'un ou plusieurs monomère(s) acrylique(s) éventuellement associé(s) à un ou plusieurs monomère(s) vinylique, en présence d'un copolyester comportant une pluralité de motifs dérivés de diols et/ou de diacides portant un ou plusieurs groupes sulfoniques ou sulfonates tels que ceux décrits dans les brevets ou demandes de brevet précités. De tels copolymères greffés ont été décrits dans la demande de brevet européen publiée sous le n° 0.260.203 dont l'enseignement concernant lesdits copolymères greffés est incorporé dans la présente demande par référence.

Les compositions de polymères selon l'invention peuvent être préparées par tout procédé permettant d'incorporer le composé amphiphile (B) au polymère (Pm). Un procédé qui convient tout particulièrement bien à l'obtention de ces compositions consiste à ajouter le composé amphiphile (B) à une dispersion aqueuse ou hydro-organique de particules du polymère transformable (Pm). De cette façon, on obtient des particules de polymère (Pm) comportant, implantées à leur surface, des molécules du composé amphiphile (B). Dans ces particules, les chaînes hydrophobes du composé (B) sont emmêlées de façon intime avec les chaînes du polymère (Pm) et les parties hydrophile et électroactive du composé (B) sont disposées à la surface desdites particules.

Par conséquent, les polymères transformables (Pm) cités ci-avant sont mis en oeuvre, de préférence, sous forme de dispersions stables, ou latex, dans l'eau ou un milieu hydro-organique. Lorsque le polymère ne comporte pas de groupe hydrophile permettant d'obtenir aisément un latex, on peut lui associer un ou plusieurs agents tensio-actifs ioniques ou non ioniques tels que ceux utilisés habituellement pour l'obtention de dispersions aqueuses et bien connus de l'homme de métier. Pour l'obtention des particules selon l'invention, la teneur en polymère des latex n'est pas critique et peut varier dans de larges limites. En général, des latex contenant de 1 à 50 % en poids de polymère conviennent bien ; de préférence, on fait appel à des latex contenant de 5 à 30 % en poids de polymère. La dimension des particules du polymère constituant le latex est choisie en fonction de l'application à laquelle est destinée le latex final ; en général, on fait appel à des latex dont le diamètre des particules de polymère est compris entre environ 0,01 et 15 µm et, de préférence, entre 0,05 et 5 µm.

Les particules de polymères modifiées par les composés organiques amphiphiles de formule (I) peuvent être obtenues par addition sous agitation d'une solution du composé amphiphile (B) dans un solvant organique à une dispersion aqueuse ou hydro-organique du polymère-support (Pm). La nature du solvant n'est pas critique et dépend essentiellement de la nature du composé amphiphile, de celle du polymère-support et du milieu le contenant. On utilise, de préférence, des solutions du composé amphiphile dans un solvant organique. Ainsi, lorsque le composé amphiphile est un dérivé du tétrathiafulvalène (TTF), on peut faire appel à un hydrocarbure ou à un hydrocarbure chloré tel que le toluène, le chloroforme ou le dichlorométhane; on peut aussi utiliser un solvant miscible à l'eau tel que l'acétone et la méthyléthylcétone ou encore des mélanges de solvants tels que chloroforme/acétonitrile.

Lorsque l'addition est terminée, le solvant du composé amphiphile est éliminé par évaporation. Pour assurer un mélange homogène du composé amphiphile avec le polymère-support, on peut procéder à un chauffage du mélange à une température qui dépend de la nature du polymère. En général, il se révèle avantageux de conduire l'addition du composé amphiphile au voisinage de la température de transition vitreuse du polymère (Pm). Lorsque le solvant du composé amphiphile exerce une action de gonflement du polymère-support, un tel chauffage peut s'avérer inutile.

Les quantités respectives de polymère (Pm) et de composé amphiphile (B) présents dans les compositions selon l'invention peuvent varier dans de larges limites. Ainsi, la quantité de composé (B) peut représenter de 0,1 à 20 % en poids du polymère (Pm) et, de préférence, de 0,2 à 5 %.

Les compositions de polymère-support (Pm) et du composé amphiphile (B) peuvent être séparées du latex par les méthodes connues, par exemple par centrifugation.

Elles peuvent également être utilisées sous la forme de latex ou dispersions, notamment aqueuses.

Les compositions de polymère (Pm) et de composé amphiphile (B), conviennent tout particulièrement bien pour l'obtention de polymères conducteurs faciles à mettre en oeuvre sous forme d'objets variés tels que des films, des fils, des revêtements, des objets moulés. La présente invention a donc encore pour objet de tels polymères conducteurs et leurs procédés d'obtention.

Ces dispersions, et notamment les dispersions aqueuses, peuvent être utilisées pour l'obtention de films thermoplastiques portant un revêtement de polymère électroconducteur sur au moins une de leurs faces. Comme films thermoplastiques, on peut citer des films en polyéthylène, en polypropylène, en polyamides (polyamides-66 ou polyamide-6 par exemple), en polychlorure de vinyle, en polychlorure de vinylidène, en dérivés de la cellulose, en polyester et notamment en polytéréphtalate d'alkylèneglycols. La dispersion de polymère selon l'invention peut alors être déposée sur les films thermoplastiques par les méthodes connues d'enduction. Dans le cas où le film est obtenu par étirage ou multiétirage d'un film extrudé amorphe, l'enduction peut être réalisée avant tout étirage ou, le cas échéant, entre deux étirages successifs (enduction en ligne) ou après obtention du film étiré (enduction en reprise). Préalablement à l'enduction par le polymère électro-conducteur, le film thermoplastique peut subir un traitement destiné à en améliorer l'adhésion au revêtement électroconducteur (par exemple traitement corona) ou peut recevoir un revêtement primaire d'adhésion de type connu. Les films thermoplastiques portant un revêtement de polymère électro-conducteur selon l'invention constituent un dernier objet de la présente demande.

Les compositions polymériques transformables constituées par au moins un polymère transformable (Pm) et un composé amphiphile (B) peuvent avoir été rendues électroconductrices par les précurseurs du dopant Z , comme par exemple l'iode, le brome ou le chlore.

Ce dopage s'effectue, soit sur la composition polymériques telle quelle, soit de préférence sur la composition polymérique mise en forme, notamment sous la forme d'un revêtement d'un film en polymère thermoplastique comme cela a été décrit précédemment.

Les exemples qui suivent illustrent l'invention.

### EXEMPLE 1 Synthèse du dioctadécylthio-bis(méthoxycarbonylméthyl-thio) tétrathiofulvalène (C18-TTF).

Cette synthèse a été effectuée en quatre étapes.

### 1) Synthèse du composé organozincique (a):

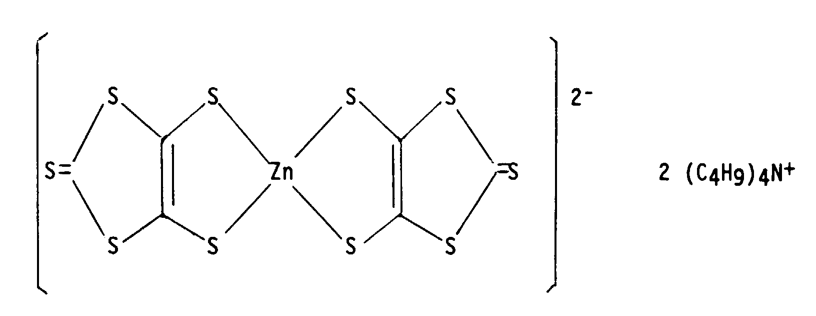

Dans un réacteur de 1 litre sous atmosphère d'azote sec, on ajoute 23g de sodium à 200 ml de disulfure de carbone (CS₂). On chauffe à reflux à 40°C et on ajoute goutte à goutte 200 ml de diméthylformamide (DMF) pendant 30 minutes. On maintient pendant 2 h à reflux. On ajoute ensuite 200 ml de CS₂ et 200 ml de DMF, et on porte le mélange à reflux pendant encore 2 h. On évapore alors la solution à 45 °C sous pression réduite. Le résidu obtenu est redissous dans un mélange contenant 600 ml de méthanol et 300 ml d'eau. On ajoute alors successivement :
- 20 g de ZnCl₂ dans 500 ml d'ammoniaque et 500 ml de méthanol;
- 80 g de bromure de n-tétrabutyl-ammonium dans 250 ml d'eau.

On obtient un précipité violet dans une solution rouge sombre, que l'on laisse reposer. On filtre ensuite le précipité, on le lave à l'isopropanol et à l'éther et on le sèche. On obtient ainsi 114 g du composé organozincique (a) que l'on recristallise dans un mélange acétone/isopropanol. Le rendement de la réaction est de 97 %.

### 2) Synthèse des thiones (b1) et (b2) à partir de (a).

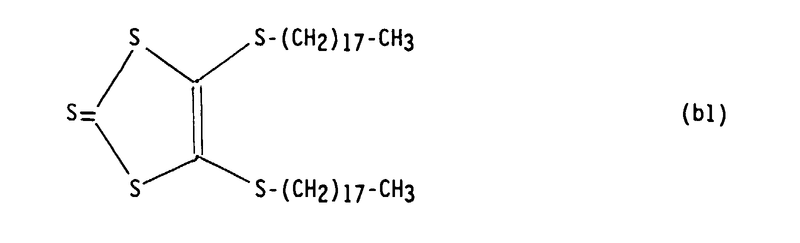

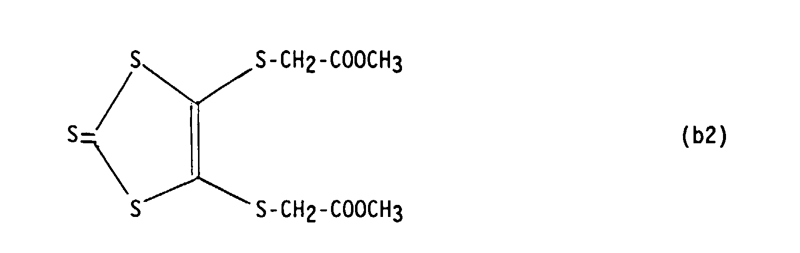

On mélange 10 millimoles (mmol) du composé (a) avec 40 mmol de 1-bromo-octadécane dans 400 ml d'acétone. On porte le mélange à reflux. Après refroidissement, on obtient un précipité jaune que l'on recristallise dans l'acétone. On vérifie par spectroscopie IR que l'on a obtenu le composé thione (b1): bande à 1060 cm⁻¹. Le rendement de la réaction est de 50 % environ.

On procède de la même façon pour la synthèse de (b2), mais en remplaçant le 1-bromooctadécane par le bromo-acétate de méthyle. Après refroidissement, on obtient un composé ocre que l'on recristallise dans l'éthanol. On vérifie par spectroscopie IR que l'on a obtenu le composé thione ester (b2): bandes à 1060 cm⁻¹ et à 1725 cm⁻¹. Le rendement de la réaction est de 60 % environ.

### 3) Synthèse des cétones (c1) et (c2) à partir de (b1) et (b2).

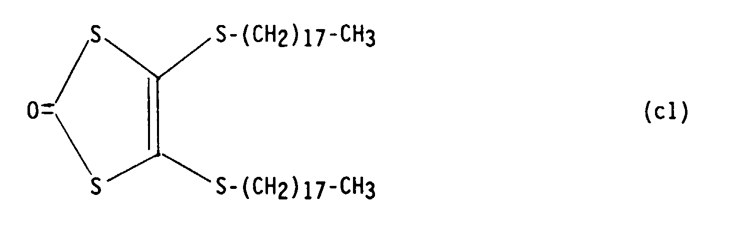

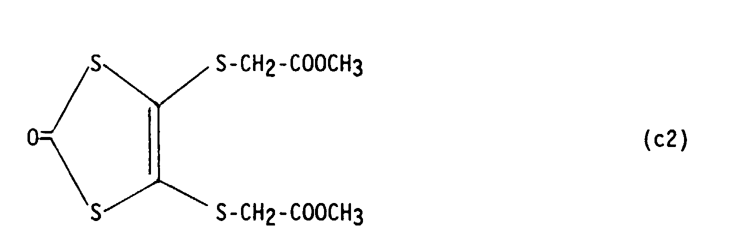

On procède de la même façon pour synthétiser les deux cétones. On ajoute goutte à goutte 10,46 g d'acétate mercurique contenu dans 300 ml d'acide acétique, dans 4,78 g de composé (b1) ou (b2) contenu dans 400 ml de chloroforme refroidi à l'aide d'un bain de glace. On obtient un précipité blanc. Après agitation à température ambiante pendant 2 h, on filtre et on lave abondamment. Les deux cétones (c1) et (c2) sont purifiées par chromatographie sur colonne de silice. On vérifie par spectroscopie IR que les produits obtenus présentent les bandes caractéristiques des cétones attendues : à 1670-1675 cm⁻¹ pour (c1), à 1670-1675 cm⁻¹ et à 1725 cm⁻¹ pour (c2).

### 4) Synthèse du C18-TTF.

On mélange 3,7 g de cétone (c1) avec 1,7 g de cétone (c2) dans 100 ml de triéthylphosphite pur (distillé sous azote) et on chauffe au reflux pendant 1 h. Par refroidissement, on obtient 2 g de précipité orange. On sépare par chromatographie le C18-TTF. Le rendement est de 20%.

### EXEMPLE 2

a) Préparation d'un latex de particules de copolymère styrènebutadiène comportant des molécules de dioctadécylthiobis(méthoxycarbonylméthyl-thio) tétrathiofulvalène à leur surface.
   Latex utilisé: copolymère styrène (48% en moles), butadiène (58%),acide maléique (2%) à 10% d'extrait sec
   Dans 10 g de ce latex, on ajoute, sous agitation, à pH 4; et à température ambiante, 0,6 g d'une solution chloroformique contenant 8 mg de TTF préparé dans l'exemple 1. On chauffe ensuite à 65°C pendant 15 h sous agitation.
   Le latex comportant le composé amphiphile est filtré sur une toile de nylon de maille égale à 5 µm.
   On a obtenu de cette façon un latex de particules styrène-butadiène-acide maléique comportant, implanté à leur surface, environ 0,8 % en poids de C18-TTF par rapport à l'extrait sec.
b) Obtention d'un polymère conducteur.

Sur une plaque de verre, on coule un film du latex modifié préparé en a), à l'aide d'un tire-film réglé pour obtenir une épaisseur de 0,8 mm. Le film et le support sont placés dans une étuve pendant 24 h afin d'évaporer le chloroforme et l'eau. Lorsque le séchage est terminé, on sépare le film de son support.

Le film est mis en contact pendant 3 h dans un cristallisoir avec des vapeurs d'iode, afin de le doper par oxydation. Il est ensuite conditionné dans un dessicateur avant les mesures de résistance de surface.

La résistance de surface du film est déterminée au moyen d'un électromètre de marque commerciale KEITHLEY 617® et d'une cellule de KEITHLEY 6105® comprenant 3 électrodes. A partir de la valeur de la résistance de surface on calcule aisément la conductivité de surface. Le film composite obtenu présente une conductivité de surface de 12 x 10⁻⁸ S.cm⁻¹ après un maintien de 24 h en dessicateur.

A titre comparatif, on a préparé un film en suivant le mode opératoire décrit ci-avant, mais après avoir remplacé le copolymère styrène/butadiène/acide maléique modifié par l'implantation du C18-TTF par le même copolymère styrène/butadiène/acide maléique non modifié. Dans ces conditions, on a obtenu un film présentant une conductivité de surface de 1,65 x 10⁻¹³ S.cm⁻¹ après un maintien de 24 h en dessicateur.

### EXEMPLES 3 à 5

En opérant comme dans l'exemple 2, on a préparé une série de films électro-conducteurs à partir de différents latex de copolymère styrène/butadiène/acide maléique, modifié par l'implantation de C18-TTF préparé dans l'exemple 1. L'implantation du C18-TTF et la préparation des films électroconducteurs ont été conduites dans les mêmes conditions que pour l'exemple 2 sauf pour les caractéristiques suivantes indiquées ci-après, avec les valeurs de conductivité de surface obtenues.

### Exemple 3:

- copolymère à 37 % en moles de butadiène, 59 % en moles de styrène et 4 % en moles d'acide maléique;
- implantation à 65 °C avec une solution de C18-TTF dans le chloroforme, à pH 4 et une durée d'agitation de 15 h;
- conductivité de surface: 16,5 x 10⁻⁸ S.cm⁻¹.

### Exemple 4:

- copolymère à 37 % en moles de butadiène, 59 % en moles de styrène et 4 % en moles d'acide maléique;
- implantation à 95 °C avec une solution de C18-TTF dans le toluène, à pH 4 et une durée d'agitation de 15 h;
- conductivité de surface: 15 x 10⁻⁸ S.cm⁻¹.

### Exemple 5:

- copolymère à 48 % en moles de butadiène, 50 % en moles de styrène et 2 % en moles d'acide maléique;
- implantation à 95 °C avec une solution de C18-TTF dans le toluène, à pH 4 et une durée d'agitation de 15 h;
- conductivité de surface: 12 x 10⁻⁸ S.cm⁻¹.

## Revendications

1. Compositions polymériques caractérisées en ce qu'elles sont constituées par au moins un polymère transformable (Pm) et au moins un composé organique amphiphile (B) choisi parmi les complexes à transfert de charge et les sels d'ions radicaux de formule générale (I):
D_{d} Aₐ Z_{z} (I)
dans laquelle:
- D représente un donneur d'électrons,
- A représente un accepteur d'électrons,
- Z représente un dopant pouvant être lui-même donneur ou accepteur d'électrons non amphiphile ,
- l'un au moins des composés D et A est amphiphile et comporte au moins un substituant hydrocarboné saturé ou insaturé ayant au moins 10 atomes de carbone,
- d représente un nombre égal ou supérieur à 0,
- a représente un nombre égal ou supérieur à 0,
- z représente un nombre égal ou supérieur à 0,
- l'un au moins des symboles d et a représente un nombre supérieur à 0.

2. Compositions polymériques selon la revendication 1, caractérisées en ce que dans la formule (I) du composé organique amphiphile (B) les symboles d, a et z représentent indépendamment les uns des autres des nombres allant jusqu'à 20.

3. Compositions polymériques selon l'une des revendications 1 ou 2, caractérisées en ce que dans la formule (I) du composé organique amphiphile (B) les donneurs d'électrons D sont choisis parmi:
_ les tétrahétérofulvalènes et leurs dérivés de formule générale (II): 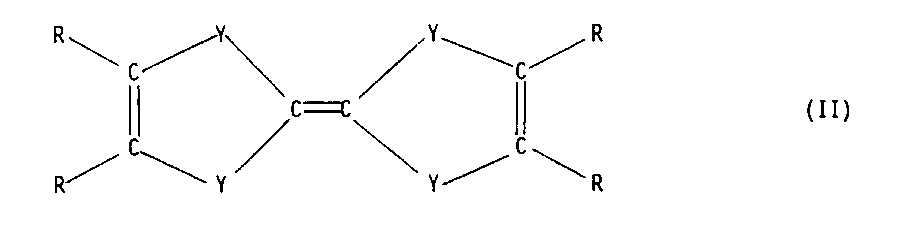 dans laquelle Y représente S ou Se et R représente un groupement hydrocarboné saturé ou insaturé, aliphatique, cycloaliphatique ou aromatique;
_ les tétrahétérotétracènes et leurs dérivés de formule générale (III): 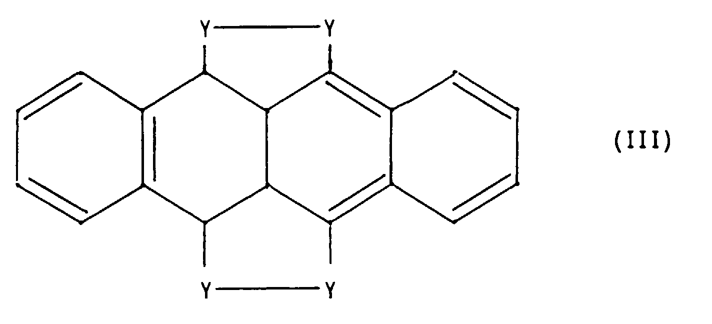 dans laquelle Y représente S et/ou Se;
_ les tétrahétéronaphtalènes et leurs dérivés de formule générale (IV): 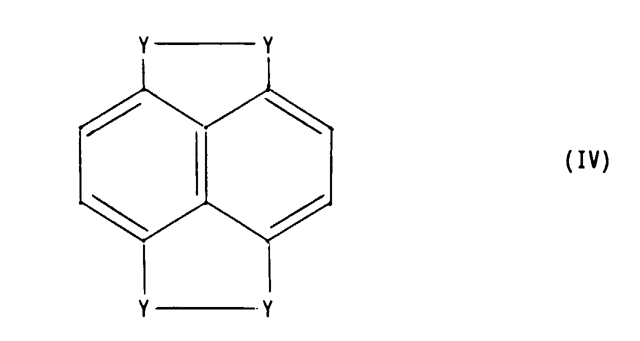 dans laquelle Y représente S et/ou Se;
_ le pérylène et ses dérivés;
_ les bishétéropyrannes et leurs dérivés de formule générale (V): 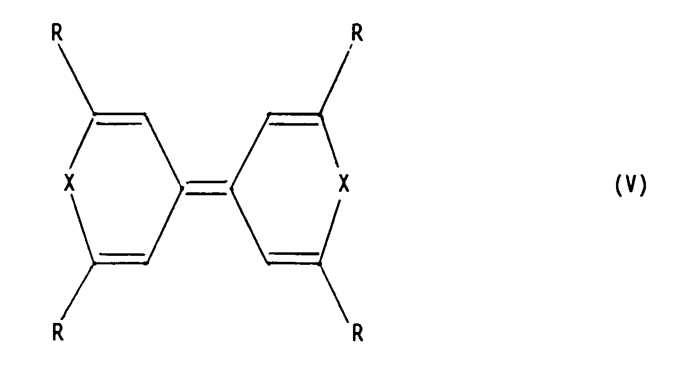 dans laquelle X représente S et/ou Se ou un radical N-alkyle et R représente un radical hydrocarboné saturé ou insaturé, aliphatique, cycloaliphatique ou aromatique;
_ les bases aliphatiques telles que les groupes ammonium quaternaires comportant 4 radicaux hydrocarbonés saturés ou insaturés, dont l'un au moins a au moins 10 atomes de carbone;
_ les bases aromatiques telles que les groupes ammonium quaternaire dérivant de l'aniline ou de dérivés de l'aniline, dont le substituant de l'atome d'azote ou le cas échéant au moins un substituant du ou des cycles benzéniques est un radical hydrocarboné saturé ou insaturé ayant au moins 10 atomes de carbone, de la N,N'-tétraméthylphénylènediamine et de ses dérivés;
_ les bases hétérocycliques telles que les groupes ammonium quaternaires dérivant des pyridines, des pipéridines, des bipyridines, des bipipéridines, des benzopyridines comme les quinoléines, les isoquinoléines, les acridines, les phénazines et les phénanthrolines, dont le substituant de l'atome d'azote ou le cas échéant au moins un substituant du ou des hétérocycles et des cycles benzéniques est un radical hydrocarboné saturé ou insaturé ayant au moins 10 atomes de carbone;
_ les bases hétérocycliques comportant plusieurs hétéroatomes de nature différente tels que des atomes de soufre et d'azote, comme les N-alkylbenzothiazoles et leurs dérivés substitués et les N-alkylindoléninium triméthinecyanines et leurs dérivés substitués.

4. Compositions polymériques selon l'une des revendications 1 à 3, caractérisées en ce que dans la formule (I) du composé organique amphiphile (B) les accepteurs d'électrons A sont choisis parmi: le tétracyanoéthylène (TCNE), l'hexacyanobutadiène (HCBD), le 1,2,4,5-tétracyanobenzène (TCNB), le 7,7,8,8-tétracyanoquinodiméthane (TCNQ) et ses dérivés substitués, le tétracyanodiquinodiméthane (TCNDQ), le benzotétracyanoquinodiméthane (benzo-TCNQ), la 2,3,5,6-tétrachloro-parabenzoquinone (CA), le trinitrobenzène (TNB), le tétranaphto-quinodiméthane (TNAP), le thiophènetétracyanoquinodiméthane (thiophène-TCNQ) le sélénophènetétracyanoquinodiméthane (sélénophène-TCNQ), la tétracyanoquinoquinazolino-quinazoline ainsi que les dérivés de ces accepteurs d'électrons comme leurs dérivés halogénés, fluorés plus particulièrement, leurs dérivés alcoxylés et leurs dérivés alkylés.

5. Compositions polymériques selon l'une des revendications 1 à 4, caractérisées en ce que dans la formule (I) du composé organique amphiphile (B) le groupe dopant Z représente un acide de Lewis tel que I⁻, (I₃)⁻, (PF₆)⁻, (ClO₄)⁻, (BF₄)⁻, (ReO₄)⁻, (IO₄)⁻, (FSO₃)⁻, (AsF₄)⁻, (AsF₆)⁻, Br⁻, Cl⁻ et (MnCl₆)⁻ et de préférence Z représente I⁻ , (I₃)⁻ ou Cl⁻.

6. Compositions polymériques selon l'une des revendications 1 à 5, caractérisées en ce que le composé organique amphiphile (B) contient un composé donneur de formule générale (VI): 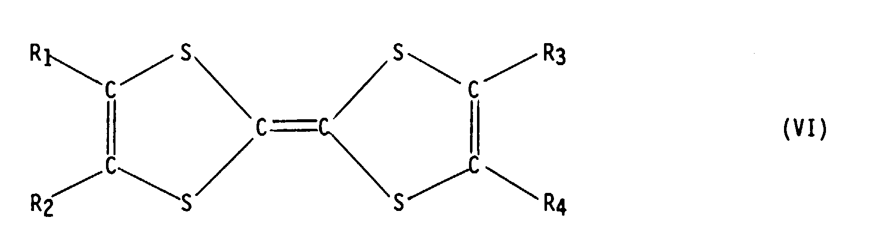 dans laquelle :
- R₁ et R₂, identiques ou différents, représentent des groupes hydrocarbonés dont l'un au moins est un groupe hydrophobe,
- R₃ et R₄, identiques ou différents, représentent des groupes hydrophiles,
ledit composé étant de préférence associé à un dopant Z tel que défini dans la revendication 5.

7. Compositions selon la revendication 6, caractérisées en ce que le composé amphiphile (B) contient un composé de formule (VI) dans laquelle:
- R₁ et R₂ sont constitués par des radicaux alkyles ou alkyl-thio, linéaires ou ramifiés, ayant de 1 à 30 atomes de carbone, des radicaux aryles ou aryl-thio tels que phényle, phénylthio ou naphtyle, des radicaux alkylaryles ou alkylaryl-thio dans lesquels le ou les substituants alkyles ont de 1 à 30 atomes de carbone et la partie aryle est un radical phényle ou naphtyle, des radicaux aralkyles ou aralkyl-thio dans lesquels la partie alkyle a de 1 à 30 atomes de carbone et la partie aryle est un radical phényle ou naphtyle, l'un au moins des groupes R₁ et R₂ étant hydrophobe, c'est-à-dire qu'il est constitué par un radical alkyle ou alkyl-thio, linéaire ou ramifié, ayant de 10 à 30 atomes de carbone ou par un radical alkylaryle, alkylaryl-thio, aralkyle ou aralkyl-thio dont la ou les parties alkyles ont 6 à 30 atomes de carbone;
- R₃ et R₄ sont constitués par le groupe hydroxycarbonyle, des groupes hydroxycarbonylalkyles ou hydroxycarbonylalkyl-thio ayant 2 à 7 atomes de carbone, alcoxycarbonyles, alcoxycarbonylalkyles ou alcoxycarbonylalkyl-thio ayant de 2 à 8 atomes de carbone, le groupe carbamoyle, des groupes carbamoylalkyles ou N-alkylcarbamoylalkyles, ayant 2 à 12 atomes de carbone.

8. Compositions selon la revendication 7, caractérisées en ce que le composé amphiphile contient un composé de formule générale (VI) dans laquelle R₁ et R₂ sont de préférence tous deux des groupes hydrophobes.

9. Compositions selon l'une des revendications 7 ou 8, caractérisées en ce que le composé amphiphile contient un composé de formule générale (VI) dans laquelle :
- R₁ et R₂ sont de préférence les radicaux comportant une chaîne hydrocarbonée linéaire et/ou cyclique ayant de 14 à 30 atomes de carbone tels que les radicaux tétradécyle, tétradécyl-thio, hexadécyle, hexadécyl-thio, octadécyle, octadécyl-thio, eicosanyle, eicosanyl-thio, nonylphényles, octylphényles, dinonylphényles, dioctylphényles;
- R₃ et R₄ sont de préférence le groupe hydroxycarbonyle, les groupes hydroxycarbonylalkyles et hydroxycarbonyl-thio ayant de 2 à 4 atomes de carbone tels que les radicaux hydroxycarbonylméthyle, hydroxycarbonylméthyl-thio, hydroxycarbonyléthyle, hydroxycarbonyléthyl-thio, hydroxycarbonylpropyle, hydroxycarbonylpropyl-thio et les groupes alcoxycarbonyles, alcoxycarbonylalkyles et alcoxycarbonylalkyl-thio ayant de 2 à 5 atomes de carbone tels que les radicaux méthoxycarbonyle, éthoxycarbonyle, méthoxycarbonylméthyle, méthoxycarbonylméthyl-thio, méthoxycarbonyléthyle, méthoxycarbonyléthyl-thio, méthoxycarbonylpropyle, méthoxycarbonylpropyl-thio, éthoxycarbonyléthyle, éthoxycarbonyléthyl-thio.

10. Compositions selon l'une quelconque des revendications 1 à 9, caractérisées en ce que le polymère transformable (Pm) est un polymère thermoplastique.

11. Compositions selon l'une quelconque des revendications 1 à 9, caractérisées en ce que le polymère transformable (Pm) est un copolymère styrène-butadiène-acide carboxylique insaturé.

12. Compositions selon l'une quelconque des revendications 1 à 11, caractérisées en ce qu'elles sont sous forme de particules de polymères (Pm) ayant, implantées à leur surface, des molécules de composé amphiphile (B).

13. Compositions selon la revendication 12, caractérisées en ce que les particules sont sous forme d'une dispersion stable dans l'eau ou dans un milieu hydro-organique.

14. Compositions selon l'une quelconque des revendications 1 à 13, caractérisées en ce que le composé amphiphile (B) représente de 0,1 à 20 % en poids du polymère (Pm).

15. Procédé d'obtention de compositions polymériques selon l'une quelconque des revendications 1 à 14, caractérisé en ce que l'on ajoute une solution d'un composé amphiphile (B) dans un solvant à une dispersion stable d'un polymère (Pm) dans l'eau ou un milieu hydro-organique, puis que l'on élimine, le cas échéant, le solvant.

16. Procédé selon la revendication 15, caractérisé en ce que le mélange constitué par la dispersion de polymère (Pm) et le composé amphiphile est porté à la température de transition vitreuse du polymère (Pm).

17. Procédé selon l'une des revendications 15 ou 16, caractérisé en ce que les compositions polymériques transformables selon l'une des revendications 1 à 14, constituées par au moins un polymère transformable (Pm) et un composé amphiphile (B) ont été rendues électroconductrices par dopage à l'aide d'un précurseur du dopant Z, tel que l'iode, le brome ou le chlore.

18. Procédé selon la revendication 17, caractérisé en ce que le dopage s'effectue, soit sur la composition polymérique telle quelle, soit de préférence sur la composition polymérique mise en forme, notamment sous la forme d'un revêtement d'un film en polymère thermoplastique.

19. Films en polymères thermoplastiques comportant un revêtement d'une composition polymère électroconductrice selon l'une quelconque des revendications 1 à 14.

20. Films en polyester comportant un revêtement d'une composition polymère électroconductrice selon l'une quelconque des revendications 1 à 14.

## Patentansprüche

1. Polymerzusammensetzungen, dadurch gekennzeichnet, dass sie durch mindestens ein umformbares Polymer (Pm) und mindestens eine amphiphile organische Verbindung (B) gebildet werden, ausgewählt aus den Komplexen zur Ladungsübertragung und den Radikalionensalzen der allgemeinen Formel (I):
D_{d} Aₐ Z_{z} (I)
in welcher:
- D einen Elektronendonator bedeutet,
- A ein Elektronenakzeptor bedeutet,
- Z ein Dopant bedeutet, welches selbst nicht-amphiphiler Donator oder Akzeptor von Elektronen sein kann,
- mindestens eine der Verbindungen D und A amphiphil ist und mindestens einen gesättigten oder ungesättigten Kohlenwasserstoff-Substituenten mit mindestens 10 Kohlenstoffatomen aufweist,
- d eine Zahl ≥ 0 ist,
- a eine Zahl ≥ 0 ist,
- z eine Zahl ≥ 0 ist,
- mindestens eines der Symbole d und a eine Zahl > 0 ist.

2. Polymerzusammensetzungen nach Anspruch 1, dadurch gekennzeichnet, dass in der Formel (I) der amphiphilen, organischen Verbindung (B) die Symbole d, a und z unabhängig voneinander die Zahlen bis zu 20 bedeuten.

3. Polymerzusammensetzungen nach einem der Ansprüche 1 oder 2, dadurch gekennzeichnet, dass in der Formel (I) der amphiphilen, organischen Verbindung (B) die Elektronendonatoren D ausgewählt sind aus:
- den Tetraheterofulvalenen und ihren Derivaten der allgemeinen Formel (II) 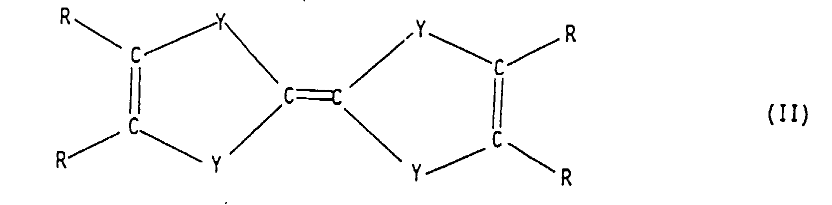 in welcher Y S oder Se bedeutet, und R eine gesättigte oder ungesättigte, aliphatische, cycloaliphatische oder aromatische Kohlenwasserstoff-Gruppe bedeutet;
- den Tetraheterotetracenen und ihren Derivaten der allgemeinen Formel (III): 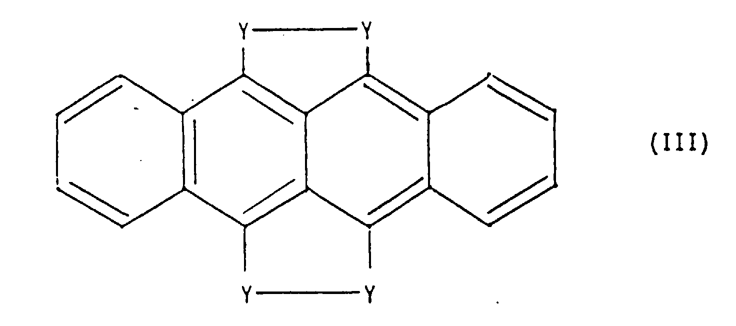 in welcher Y S und/oder Se bedeutet;
- den Tetraheteronaphthalinen und ihren Derivaten der allgemeinen Formel (IV): 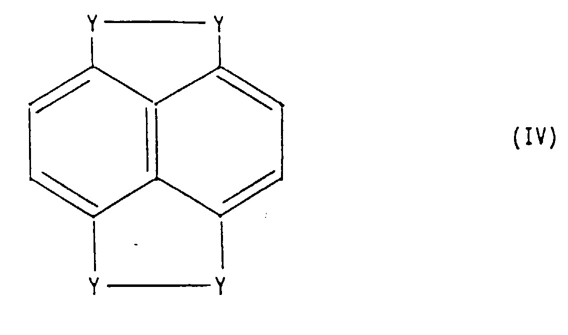 in welcher Y S und /oder Se bedeutet;
- dem Perylen und seinen Derivaten;
- den Bisheteropyranen und ihren Derivaten der allgemeinen Formel (V): 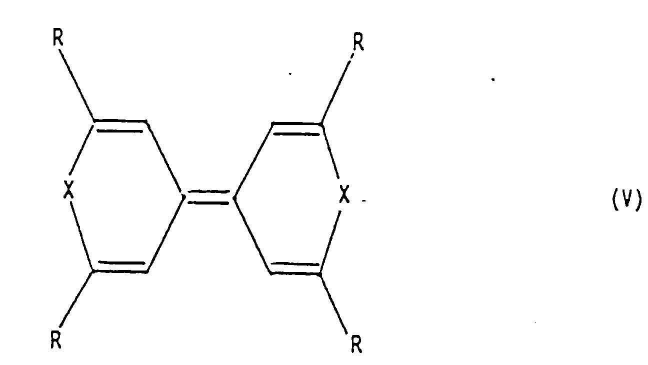 in welcher X S und /oder Se oder ein N-Alkyl-Radikal, und R ein gesättigtes oder ungesättigtes, aliphatisches, cycloaliphatisches oder aromatisches Kohlenwasserstoff-Radikal bedeuten;
- den aliphatischen Basen wie quatemären Ammoniumgruppen, welche 4 gesättigte oder ungesättigte Kohlenwasserstoff-Radikale beinhalten, wovon mindestens eines mindestens 10 Kohlenstoffatome aufweist;
- den aromatischen Basen wie quatemären Ammoniumgruppen, welche vom Anilin oder Anilin-Derivaten abgeleitet sind, deren Substituent des Stickstoffatoms oder gegebenenfalls mindestens ein Substituent des oder der Benzolringe ein gesättigtes oder ungesättigtes Kohlenwasserstoff-Radikal ist, welches mindestens 10 Kohlenstoffatome aufweist, vom N,N' Tetramethylphenylendiamin und seinen Derivaten;
- den heterozyklischen Basen wie quatemäre Ammoniumgruppen, die von den Pyridinen, den Piperidinen, den Bipyridinen, den Bipiperidinen, den Benzopyridinen wie die Chinoline, die Isochinoline, die Acridine, die Phenazine und die Phenathroline abgeleitet sind, deren Substituent des Stickstoffatoms oder gegebenenfalls ein Substituent des oder der heterozyklischen Verbindungen und der Benzolringe ein gesättigtes oder ungesättigtes Kohlenwasserstoff-Radikal ist, welches mindestens 10 Kohlenstoffatome aufweist;
- den heterozyklischen Basen, welche mehrere Heteroatome verschiedener Art umfassen, wie Schwefel- und Stickstoffatome, wie die N-Alkylbenzothiazole und ihre substituierten Derivate und die N-Alkylindoleniniumtrimethincyanine und ihre substituierten Derivate.

4. Polymerzusammensetzungen nach einem der Ansprüche 1 bis 3, dadurch gekennzeichnet, dass in der Formel (I) der amphiphilen, organischen Verbindung (B) die Elektronenakzeptoren A ausgewählt sind aus: dem Tetracyanoethylen (TCNE), dem Hexacyanobutadien (HCBD), dem 1,2,4,5-Tetracyanobenzol (TCNB), dem 7,7,8,8-Tetracyanochinodimethan (TCNQ) und seinen substituierten Derivaten, dem Tetracyanodichinodimethan (TCNDQ), dem Benzotetracyanochinodimethan (Benzo-TCNQ), dem 2,3,5,6-Tetrachloroparabenzochinon (CA), dem Trinitrobenzol (TNB), dem Tetranaphtochinodimethan (TNAP), dem Thiophentetracyanochinodimethan (Thiophen-TCNQ), dem Selenophentetracyanochinodimethan (Selenophen-TCNQ), dem Tetracyanochinochinazolino-chinazolin sowie die Derivate dieser Elektronenakzeptoren wie ihre Halogenderivate, insbesondere Fluorderivate, ihre Alkoxyl-Derivate und ihre Alkyl-Derivate.

5. Polymerzusammensetzungen nach einem der Ansprüche 1 bis 4, dadurch gekennzeichnet, dass in der Formel (I) der amphiphilen, organischen Verbindung (B) die Gruppe Dopant Z eine Lewis-Säure bedeutet wie I⁻ , (I₃)⁻, (PF₆)⁻, (Cl0₄)⁻, (BF₄)⁻, (Re0₄)⁻, (I0₄)⁻, (FSO₃)⁻, (AsF₄)⁻, (AsF₆)⁻, Br⁻, Cl⁻ und (MnCl₆)⁻, und vorzugsweise bedeutet Z I⁻, (I₃)⁻ oder Cl⁻.

6. Polymerzusammensetzungen nach einem der Ansprüche 1 bis 5, dadurch gekennzeichnet, dass die amphiphile, organische Verbindung (B) eine Donatorverbindung der allgemeinen Formel (VI) enthält: 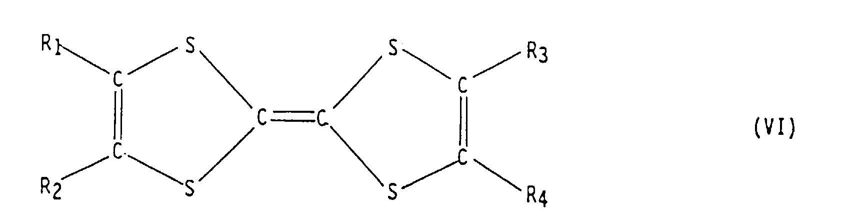 in welcher:
- R1 und R2 , identisch oder verschieden, Kohlenwasserstoff-Gruppen bedeuten, wovon mindestens eine eine hydrophobe Gruppe ist,
- R3 und R4, identisch oder verschieden, hydrophile Gruppen bedeuten,
wobei die genannte Verbindung vorzugsweise an ein Dopant Z - wie es in Anspruch 5 definiert wurde - gebunden ist.

7. Zusammensetzungen nach Anspruch 6, dadurch gekennzeichnet, dass die amphiphile Verbindung (B) eine Verbindung der Formel (VI) enthält, in welcher:
R₁ und R₂ gebildet werden durch lineare oder verzweigte Alkyl- oder Alkylthio-Radikale, welche 1 bis 30 Kohlenstoffatome aufweisen, durch Aryl- oder Arylthio-Radikale, wie Phenyl-, Phenylthio- oder Naphtyl-, durch Alkylaryl- oder Alkylarylthio-Radikale, in denen der oder die Alkyl-Substituenten 1 bis 30 Kohlenstoffatome aufweisen und der Aryl-Teil ein Phenyl- oder Naphthyl-Radikal ist, durch Aralkyl- oder Aralkylthio-Radikale, in denen der Alkyl-Teil 1 bis 10 Kohlenstoffatome aufweist und der Aryl-Teil ein Phenyl- oder Naphthyl-Radikal ist, wobei mindestens eine der Gruppen R₁ und R₂ hydrophob ist, das heißt, dass sie durch ein lineares oder verzweigtes Alkyl- oder Alkylthio-Radikal mit 10 bis 30 Kohlenstoffatomen gebildet ist, oder durch ein Alkylaryl, Alkylarylthio-, Aralkyl- oder Aralkylthio-Radikal, dessen oder deren Alkylteile 6 bis 30 Kohlenstoffatome aufweisen;
R₃ und R₄ gebildet werden durch die Hydroxycarbonyl-Gruppe, durch Hydroxycarbonylalkyl- oder Hydroxycarbonylalkylthio-Gruppen mit 2 bis 7 Kohlenstoffatomen, durch Alkoxycarbonyl-, Alkoxycarbonylalkyl- oder Alkoxycarbonylalkylthio-Gruppen mit 2 bis 8 Kohlenstoffatomen, die Carbamoyl-Gruppe, Carbamoylalkyl- oder N-alkylcarbamoylalkyl-Gruppen mit 2 bis 12 Kohlenstoffatomen.

8. Zusammensetzungen nach Anspruch 7, dadurch gekennzeichnet, dass die amphiphile Verbindung eine Verbindung der allgemeinen Formel (VI) enthält, in welcher R₁ und R₂ vorzugsweise beide hydrophobe Gruppen sind.

9. Zusammensetzungen nach einem der Ansprüche 7 oder 8, dadurch gekennzeichnet, dass die amphiphile Verbindung eine Verbindung der allgemeinen Formel (VI) enthält, in welcher:
R₁ und R₂ vorzugsweise Radikale sind, die eine lineare und/oder zyklische Kohlenwasserstoff-Kette mit 14 bis 30 Kohlenstoffatomen umfassen, wie die Tetradecyl-, Tetradecylthio-, Hexadecyl-, Hexadecylthio-, Octadecyl-, Octadecylthio, Eicosanyl-, Eicosanylthio-, Nonylphenyl-, Octylphenyl-, Dinonylphenyl-, Dioctylphenyl-Radikale;
R₃ und R₄ sind vorzugsweise die Hydroxycarbonyl-Gruppe, Hydroxycarbonylalkyl- und Hydroxycarbonylthio-Gruppen mit 2 bis 4 Kohlenstoffatomen, wie die Hydroxycarbonylmethyl-, Hydroxycarbonylmethylthio-, Hydroxycarbonylethyl-, Hydroxycarbonylethylthio-, Hydroxycarbonylpropyl-, Hydroxycarbonylpropylthio-Radikale, und Alkoxycarbonyl-, Alkoxycarbonylalkyl- und Alkoxycarbonylalkylthio-Gruppen mit 2 bis 5 Kohlenstoffatomen, wie die Methoxycarbonyl-, Ethoxycarbonyl-, Methoxycarbonylmethyl-, Methoxycarbonylmethylthio-, Methoxycarbonylethyl-, Methoxycarbonylethylthio-, Methoxycarbonylpropyl-, Methoxycarbonylpropylthio, Ethoxycarbonylethyl- und Ethoxycarbonylethylthio-Radikale.

10. Zusammensetzungen nach einem der Ansprüche 1 bis 9, dadurch gekennzeichnet, dass das formbare Polymer (Pm) ein thermoplastisches Polymer ist.

11. Zusammensetzungen nach einem der Ansprüche 1 bis 9, dadurch gekennzeichnet, dass das formbare Polymer (Pm) ein ungesättigtes Styrol-Butadien-Karboxylsäure Copolymer ist.

12. Zusammensetzungen nach einem der Ansprüche 1 bis 11, dadurch gekennzeichnet , dass sie in Form von Polymerteilchen (Pm) vorliegen, auf deren Oberfläche Moleküle der amphiphilen Verbindung (B) eingesetzt sind.

13. Zusammensetzungen nach Anspruch 12, dadurch gekennzeichnet, dass die Teilchen in Form einer stabilen Dispersion in Wasser oder in einem hydro-organischen Medium vorliegen.

14. Zusammensetzungen nach einem der Ansprüche 1 bis 13, dadurch gekennzeichnet, dass die amphiphile Verbindung (B) 0,1 bis 20 Gew.% des Polymers (Pm) ausmacht.

15. Verfahren zur Herstellung von Polymer-Zusammensetzungen nach einem der Ansprüche 1 bis 14, dadurch gekennzeichnet, dass man eine Lösung einer amphiphilen Verbindung (B) in einem Lösungsmittel zu einer stabilen Dispersion eines Polymeres (Pm) in Wasser oder in einem hydro-organischen Medium zufügt, worauf man gegebenenfalls das Lösungsmittel eliminiert.

16. Verfahren nach Anspruch 15, dadurch gekennzeichnet, dass die Mischung, welche durch die Dispersion des Polymers (Pm) und die amphiphile Verbindung dargestellt wird, bis zu der Glasübergangs-Temperatur des Polymers (Pm) erwärmt wird.

17. Verfahren nach einem der Ansprüche 15 oder 16, dadurch gekennzeichnet, dass die formbaren Polymer-Zusammensetzungen nach einem der Ansprüche 1 bis 14, welche durch mindestens ein formbares Polymer (Pm) und eine amphiphile Verbindung (B) gebildet sind, durch Doping mit Hilfe eines Zwischenstoffes des Dopant Z, wie Iod, Brom oder Chlor, elektrisch leitend gemacht worden sind.

18. Verfahren nach Anspruch 17, dadurch gekennzeichnet, dass das Doping entweder auf der Polymer-Zusammensetzung an sich oder vorzugsweise auf der in eine Form, insbesondere in die Form einer Beschichtung einer thermoplastischen Polymer-Folie, gebrachten Zusammensetzung erfolgt.

19. Folien aus thermoplastischen Polymeren, welche eine Beschichtung einer elektrisch leitenden Polymer-Zusammensetzung nach einem der Ansprüche 1 bis 14 enthalten.

20. Folien aus Polyester, die eine Beschichtung einer elektrisch leitenden Polymer-Zusammensetzung nach einem der Ansprüche 1 bis 14 tragen.

## Claims

1. Polymeric compositions, characterised in that they consist of at least one convertible polymer (Pm) and at least one amphiphilic organic compound (B) chosen from charge transfer complexes and radical ion salts of general formula (I):
D_{d}AₐZ_{z} (I)
in which:
- D represents an electron donor,
- A'represents an electron acceptor,
- Z represents a doping agent which can itself be a non-amphiphilic electron donor or electron acceptor,
- at least one of the compounds D and A is amphiphilic and contains at least one saturated or unsaturated hydrocarbon substituent having at least 10 carbon atoms,
- d represents a number equal to or greater than 0,
- a represents a number equal to or greater than 0,
- z represents a number equal to or greater than 0,
- at least one of the symbols d and a represents a number greater than 0.

2. Polymeric compositions according to claim 1, characterised in that, in the formula (I) of the amphiphilic organic compound (B), the symbols d, a and z represent, independently of one another, numbers ranging up to 20.

3. Polymeric compositions according to one of claims 1 or 2, characterised in that, in the formula (I) of the amphiphilic organic compound (B), the electron donors D are chosen from:
- tetraheterofulvalenes and their derivatives of general formula (II): 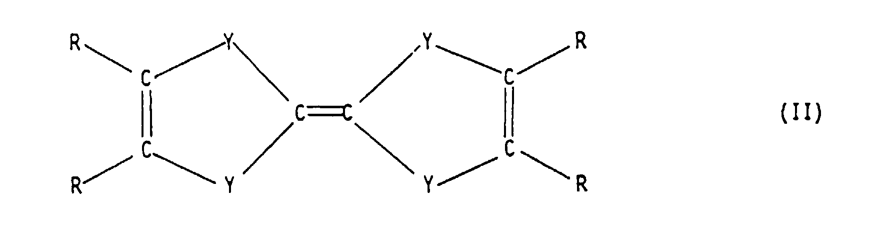 in which Y represents S or Se and R represents a saturated or unsaturated, aliphatic, cycloaliphatic or aromatic hydrocarbon group;
- tetraheterotetracenes and their derivatives of general formula (III): 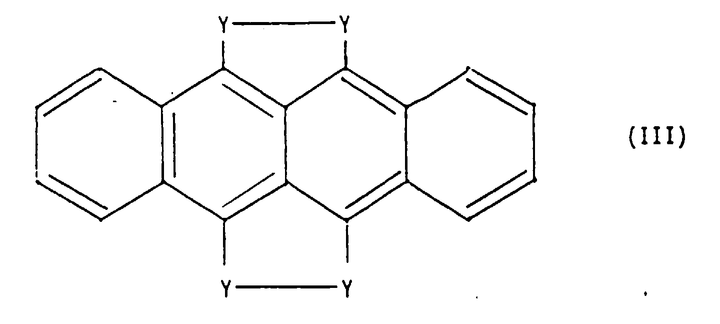 in which Y represents S and/or Se;
- tetraheteronaphthalenes and their derivatives of general formula (IV): 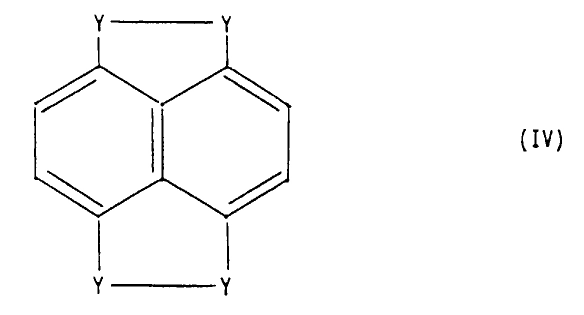 in which Y represents S and/or Se;
- perylene and its derivatives;
- bisheteropyrans and their derivatives of general formula (V): 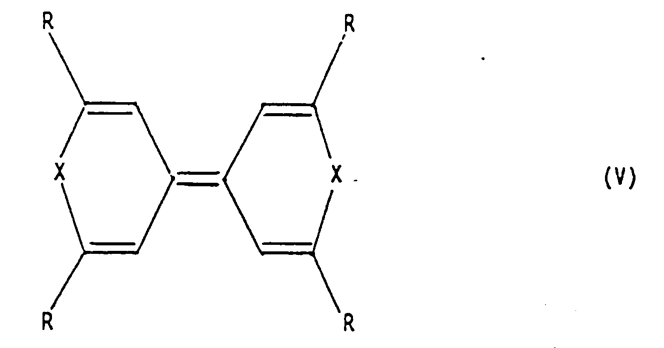 in which X represents S and/or Se or an N-alkyl radical and R represents a saturated or unsaturated, aliphatic, cycloaliphatic or aromatic hydrocarbon radical;
- aliphatic bases such as quaternary ammonium groups containing 4 saturated or unsaturated hydrocarbon radicals, at least one of which has at least 10 carbon atoms;
- aromatic bases such as quaternary ammonium groups deriving from aniline or from aniline derivatives, in which the substituent on the nitrogen atom or, if appropriate, at least one substituent on the benzene ring(s) is a saturated or unsaturated hydrocarbon radical having at least 10 carbon atoms, from N,N'-tetramethylphenylenediamine and from its derivatives;
- heterocyclic bases such as quaternary ammonium groups deriving from pyridines, piperidines, bipyridines, bipiperidines, benzopyridines such as quinolines, isoquinolines, acridines, phenazines and phenanthrolines, in which the substituent on the nitrogen atom or, if appropriate at least one substituent on the heterocycle(s) and benzene ring(s) is a saturated or unsaturated hydrocarbon radical having at least 10 carbon atoms;
- heterocyclic bases containing several heteroatoms of different natures, such as sulphur and nitrogen atoms, such as N-alkylbenzothiazoles and their substituted derivatives and N-alkylindoleninium trimethincyanines and their substituted derivatives.

4. Polymeric compositions according to anyone of claims 1 to 3, characterised in that, in the formula (I) of the amphiphilic organic compound (B), the electron acceptors A are chosen from: tetracyanoethylene (TCNE), hexacyanobutadiene (HCBD), 1,2,4,5-tetracyanobenzene (TCNB), 7,7,8,8-tetracyanoquinodimethane (TCNQ) and its substituted derivatives, tetracyanodiquinodimethane (TCNDQ), benzotetracyanoquinodimethane (benzo-TCNQ), 2,3,5,6-tetrachloro-parabenzoquinone (CA), trinitrobenzene (TNB), tetranaphthoquinodimethane (TNAP), thiophenetetracyanoquinodimethane (thiophene-TCNQ), selenophenetetracyanoquinodimethane (selenophene-TCNQ) or tetracyanoquinoquinazolinoquinazoline, as well as the derivatives of these electron acceptors, such as their halogenated, more particularly fluorinated, derivatives, their alkoxylated derivatives and their alkylated derivatives.

5. Polymeric compositions according to anyone of claims 1 to 4, characterised in that, in the formula (I) of the amphiphilic organic compound (B), the doping group Z represents a Lewis acid such as I⁻, (I₃)⁻, (PF₆)⁻, (ClO₄)⁻, (BF₄)⁻, (ReO₄)⁻, (IO₄)⁻, (FSO₃)⁻, (AsF₄)⁻, (AsF₆)⁻, Br⁻, Cl⁻ and (MnCl₆)⁻ and Z preferably represents I⁻, (I₃)⁻ or Cl⁻.

6. Polymeric compositions according to anyone of claims 1 to 5, characterised in that the amphiphilic organic compound (B) contains a donor compound of general formula (VI): 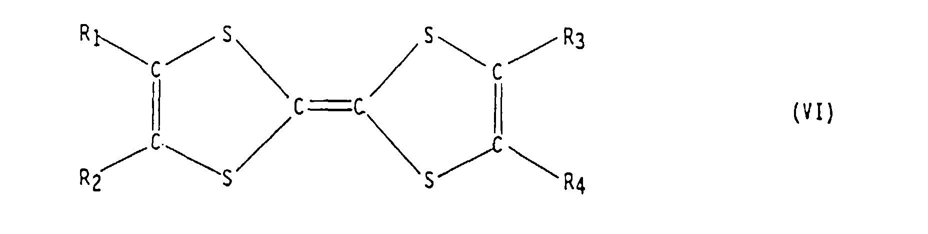 in which:
- R₁ and R₂, which are identical or different, represent hydrocarbon groups, one of least of which is a hydrophobic group,
- R₃ and R₄, which are identical or different, represent hydrophilic groups,
the said compound preferably being combined with a doping agent Z as defined in claim 5.

7. Compositions according to claim 6, characterised in that the amphiphilic compound (B) contains a compound of formula (VI) in which:
- R₁ and R₂ consist of linear or branched alkyl or alkylthio radicals having from 1 to 30 carbon atoms, aryl or arylthio radicals such as phenyl, phenylthio or naphthyl radicals, alkylaryl or alkylarylthio radicals in which the alkyl substituent(s) have from 1 to 30 carbon atoms and the aryl part is a phenyl or naphthyl radical, or aralkyl or aralkylthio radicals in which the alkyl part has from 1 to 30 carbon atoms and the aryl part is a phenyl or naphthyl radical, at least one of the groups R₁ and R₂ being hydrophobic, that is to say that it consists of a linear or branched alkyl or alkylthio radical having from 10 to 30 carbon atoms or of an alkylaryl, alkylarylthio, aralkyl or aralkylthio radical in which the alkyl part(s) have 6 to 30 carbon atoms;
- R₃ and R₄ consist of the hydroxycarbonyl group, hydroxycarbonylalkyl or hydroxycarbonylalkylthio groups having 2 to 7 carbon atoms, alkoxycarbonyl, alkoxycarbonylalkyl or alkoxycarbonylalkylthio groups having from 2 to 8 carbon atoms, the carbamoyl group, or carbamoylalkyl or N-alkylcarbamoylalkyl groups having 2 to 12 carbon atoms.

8. Compositions according to claim 7, characterised in that the amphiphilic compound contains a compound of general formula (VI) in which R₁ and R₂ are preferably both hydrophobic groups.

9. Compositions according to one of claims 7 or 8, characterised in that the amphiphilic compound contains a compound of general formula (VI) in which:
- R₁ and R₂ are preferably radicals containing a linear and/or cyclic hydrocarbon chain having from 14 to 30 carbon atoms, such as tetradecyl, tetradecylthio, hexadecyl, hexadecylthio, octadecyl, octadecylthio, eicosyl, eicosylthio, nonylphenyl, octylphenyl, dinonylphenyl, dioctylphenyl radicals;
- R₃ and R₄ are preferably the hydroxycarbonyl group, hydroxycarbonylalkyl and hydroxycarbonylalkylthio groups having from 2 to 4 carbon atoms such as the hydroxycarbonylmethyl, hydroxycarbonylmethylthio, hydroxycarbonylethyl, hydroxycarbonylethylthio, hydroxycarbonylpropyl or hydroxycarbonylpropylthio radicals, and alkoxycarbonyl, alkoxycarbonylalkyl and alkoxycarbonylalkylthio groups having from 2 to 5 carbon atoms, such as the methoxycarbonyl, ethoxycarbonyl, methoxycarbonylmethyl, methoxycarbonylmethylthio, methoxycarbonylethyl, methoxycarbonylethylthio, methoxycarbonylpropyl, methoxycarbonylpropylthio, ethoxycarbonylethyl or ethoxycarbonylethylthio radicals.

10. Compositions according to anyone of claims 1 to 9, characterised in that the convertible polymer (Pm) is a thermoplastic polymer.

11. Compositions according to anyone of claims 1 to 9, characterised in that the convertible polymer (Pm) is a styrene-butadiene-unsaturated carboxylic acid copolymer.

12. Compositions according to anyone of claims 1 to 11, characterised in that they are in the form of polymer (Pm) particles having, implanted at their surface, molecules of an amphiphilic compound (B).

13. Compositions according to claim 12, characterised in that the particles are in the form of a dispersion which is stable in water or in an aqueous/organic medium.

14. Compositions according to anyone of claims 1 to 13, characterised in that the amphiphilic compound (B) represents from 0.1 to 20 % by weight of the polymer (Pm).

15. Process for producing polymeric compositions according to anyone of claims 1 to 14, characterised in that a solution of an amphiphilic compound (B) in a solvent is added to a stable dispersion of a polymer (Pm) in water or an aqueous/organic medium, and in that, if appropriate, the solvent is then removed.

16. Process according to claim 15, characterised in that the mixture consisting of the polymer dispersion (Pm) and the amphiphilic compound is brought to the glass transition temperature of the polymer (Pm).

17. Process according to one of claims 15 or 16, characterised in that the convertible polymeric compositions according to one of claims 1 to 14, consisting of at least one convertible polymer (Pm) and an amphiphilic compound (B), were made electroconductive by doping with a precursor of the doping agent Z, such as iodine, bromine or chlorine.

18. Process according to claim 17, characterised in that the doping is carried out either on the polymeric composition as is or, preferably, on the shaped polymeric composition, especially in the form of a coating of a thermoplastic polymer film.

19. Thermoplastic polymer films containing a coating of an electroconductive polymer composition according to anyone of claims 1 to 14.

20. Polyester films containing a coating of an electroconductive polymer composition according to anyone of claims 1 to 14.
